# EUROPEAN PATENT APPLICATION

(11) **EP 4 462 913 A1**
(43) Date of publication of application: **13.11.2024**
(21) Application number: 23737102.6
(22) Date of filing: 05.01.2023
(51) Int. Cl.: H04W 72/04

(54) **GAP CONFLICT PROCESSING METHOD AND APPARATUS, TERMINAL, AND NETWORK SIDE DEVICE**

(30) Priority: 07.01.2022 CN 202210015964
(71) Applicant: VIVO MOBILE COMMUNICATION CO., LTD., Dongguan, Guangdong 523863 (CN)
(72) Inventor: LIU, Xuanbing, Dongguan, Guangdong 523863 (CN); YANG, Xiaodong, Dongguan, Guangdong 523863 (CN)
(74) Representative: Lavoix
(86) International application number: PCT/CN2023/070698
(87) International publication number: WO 2023/131240

(57) **Abstract**

This application discloses a Gap conflict processing method and apparatus, a terminal, and a network side device, and belongs to the field of communications. The method of the embodiments of this application includes the following steps. A terminal determines a first Gap according to priorities or sharing factors of at least two Gaps which conflict with each other, wherein the first Gap is any one of the following: a Gap, having the highest priority, of the two Gaps which conflict with each other; and a Gap, having the lowest sharing factor, of the two Gaps which conflict with each other. The terminal uses the first Gap. The terminal ignores a first time period, which conflicts with the first Gap, in a second Gap. The second Gap is a Gap which conflicts with the first Gap. In a case that at least two Gaps partially overlap, or at least two Gaps fully overlap, or a time distance between at least two Gaps is less than a preset threshold, it is determined that the at least two Gaps conflict with each other.

## Description

### CROSS-REFERENCE TO RELATED APPLICATIONS

This application claims the priority of Chinese Patent Application No. 202210015964.8 filed in China on January 07, 2022, the entire content of which is hereby incorporated by reference.

### TECHNICAL FIELD

This application belongs to the field of communication technologies, and in particular, to Gap conflict processing methods and apparatuses, a terminal, and a network side device.

### BACKGROUND

In a current technology, a network may configure a terminal with a plurality of concurrent independent Gaps (Gap). These Gaps can be associated to one or more particular targets. However, these Gaps may overlap or affect each other. As a result, some or all of the Gaps cannot be used. This situation is referred to as a Gap conflict. How a terminal and a network process conflicting Gaps in a Gap conflict situation is a problem to be solved.

### SUMMARY

Embodiments of this application provide a Gap conflict processing method and apparatus, a terminal, and a network side device, which can solve the problem that a terminal and a network do not reach an agreement on use of a Gap in a case of a Gap conflict.

In a first aspect, a Gap conflict processing method is provided, including the following steps.

A terminal determines a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
the terminal uses the first Gap; and
the terminal ignores a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

In a second aspect, a Gap conflict processing method is provided, including the following steps.

A terminal determines discard time periods of the various Gaps according to discard probabilities of various Gaps which conflict with each other; and
the terminal ignores the discard time periods of the various Gaps.

In a case that at least two Gaps partially overlap, or at least two Gaps fully overlap, or a time distance between at least two Gaps is less than a preset threshold, it is determined that the at least two Gaps conflict with each other.

In a third aspect, a Gap conflict processing method is provided, including the following steps.

A network side device determines a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
the network side device uses the first Gap; and
the network side device ignores a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

In a fourth aspect, a Gap conflict processing method is provided, including the following steps.

A network side device determines discard time periods of the various Gaps according to discard probabilities of various Gaps which conflict with each other; and
the network side device ignores the discard time periods of the various Gaps.

In a case that at least two Gaps partially overlap, or at least two Gaps fully overlap, or a time distance between at least two Gaps is less than a preset threshold, it is determined that the at least two Gaps conflict with each other.

In a fifth aspect, a Gap conflict processing apparatus is provided, including:
a first determining module, configured to determine a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
a first use module, configured to use the first Gap; and
a first ignoring module, configured to ignore a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

In a sixth aspect, a Gap conflict processing apparatus is provided, including:
a second determining module, configured to determine discard time periods of the various Gaps according to discard probabilities of various Gaps which conflict with each other; and
a second ignoring module, configured to ignore the discard time periods of the various Gaps,
wherein in a case that at least two Gaps partially overlap, or at least two Gaps fully overlap, or a time distance between at least two Gaps is less than a preset threshold, it is determined that the at least two Gaps conflict with each other.

In a seventh aspect, a Gap conflict processing apparatus is provided, including:
a third determining module, configured to determine a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
a third use module, configured to use the first Gap; and
a third ignoring module, configured to ignore a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

In an eighth aspect, a Gap conflict processing apparatus is provided, including:
a fourth determining module, configured to determine discard time periods of the various Gaps according to discard probabilities of various Gaps which conflict with each other; and
a fourth ignoring module, configured to ignore the discard time periods of the various Gaps,
wherein in a case that at least two Gaps partially overlap, or at least two Gaps fully overlap, or a time distance between at least two Gaps is less than a preset threshold, it is determined that the at least two Gaps conflict with each other.

According to a ninth aspect, a terminal is provided. The terminal includes a processor and a memory. The memory stores a program or instructions runnable on the processor; and the program or the instructions, when executed by the processor, implements/implement the steps of the method as described in the first aspect or the steps of the method as described in the second aspect.

In a tenth aspect, a terminal is provided, including a processor and a communication interface. The processor is configured to: determine a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other; use the first Gap; and ignore a first time period, which conflicts with the first Gap, in a second Gap, wherein the second Gap is a Gap which conflicts with the first Gap; and in a case that at least two Gaps partially overlap, or at least two Gaps fully overlap, or a time distance between at least two Gaps is less than a preset threshold, it is determined that the at least two Gaps conflict with each other. Or, the processor is configured to: determine discard time periods of the various Gaps according to discard probabilities of various Gaps which conflict with each other; and ignore the discard time periods of the various Gaps, wherein in a case that at least two Gaps partially overlap, or at least two Gaps fully overlap, or a time distance between at least two Gaps is less than a preset threshold, it is determined that the at least two Gaps conflict with each other.

In an eleventh aspect, a network side device is provided. The network side device includes a processor and a memory. The memory stores a program or instructions runnable on the processor; and the program or the instructions, when executed by the processor, implements/implement the steps of the method as described in the third aspect or the steps of the method as described in the fourth aspect.

In a twelfth aspect, a network side device is provided, including a processor and a communication interface. The processor is configured to: determine a first Gap according to priorities or sharing factors of at least two Gaps which conflict with each other, wherein the first Gap is any one of the following: a Gap, having the highest priority, of the two Gaps conflicting with each other; and a Gap, having the lowest sharing factor, of the two Gaps conflicting with each other; use the first Gap; and ignore a first time period, which conflicts with the first Gap, in a second Gap, wherein the second Gap is a Gap which conflicts with the first Gap. In a case that at least two Gaps partially overlap, or at least two Gaps fully overlap, or a time distance between at least two Gaps is less than a preset threshold, it is determined that the at least two Gaps conflict with each other. Or, the processor is configured to: determine discard time periods of the various Gaps according to discard probabilities of various Gaps which conflict with each other; and ignore the discard time periods of the various Gaps. In a case that at least two Gaps partially overlap, or at least two Gaps fully overlap, or a time distance between at least two Gaps is less than a preset threshold, it is determined that the at least two Gaps conflict with each other.

In a thirteenth aspect, a communication system is provided, including: a terminal and a network side device, wherein the terminal can be configured to execute the steps of the method as described in the first aspect or the second aspect, and the network side device can be configured to execute the steps of the method as described in the third aspect or the fourth aspect.

In a fourteenth aspect, a readable storage medium is provided. The readable storage medium stores a program or instructions. The program or the instructions, when executed by a processor, execute the steps of the method as described in the first aspect, the steps of the method as described in the second aspect, the steps of the method as described in the third aspect, or the steps of the method as described in the fourth aspect.

In a fifteenth aspect, a chip is provided. The chip includes a processor and a communication interface; the communication interface is coupled to the processor; and the processor is configured to run a program or instructions to implement the method as described in the first aspect, the method as described in the second aspect, the method as described in the third aspect, or the method as described in the fourth aspect.

In a sixteenth aspect, a computer program/program product is provided. The computer program/program product is stored in a storage medium; and the computer program/program product is executed by at least one processor to implement the steps of the method as described in the first aspect, the steps of the method as described in the second aspect, the steps of the method as described in the third aspect, or the steps of the method as described in the fourth aspect.

In the embodiments of this application, the terminal and the network side device determine a first Gap according to priorities or sharing factors of at least two Gaps which conflict with each other; and the terminal and the network side device use the first Gap and ignore a first time period, which conflicts with the first Gap, in a second Gap, wherein the second Gap is a Gap which conflicts with the first Gap. Thus, the terminal and the network side device reach an agreement on the use of the Gaps which conflict with each other, thereby improving the Gap use efficiency, improving the data transmission efficiency, and avoiding data loss.

### BRIEF DESCRIPTION OF THE DRAWINGS

FIG. 1 shows a block diagram of a wireless communication system applicable to an embodiment of this application;
FIG. 2 shows a flowchart I of steps of a Gap conflict processing method according to an embodiment of this application;
FIG. 3 shows a flowchart II of steps of a Gap conflict processing method according to an embodiment of this application;
FIG. 4 shows a flowchart III of steps of a Gap conflict processing method according to an embodiment of this application;
FIG. 5 shows a flowchart IV of steps of a Gap conflict processing method according to an embodiment of this application;
FIG. 6 shows a schematic structural diagram I of a Gap conflict processing apparatus according to an embodiment of this application;
FIG. 7 shows a schematic structural diagram II of a Gap conflict processing apparatus according to an embodiment of this application;
FIG. 8 shows a schematic structural diagram III of a Gap conflict processing apparatus according to an embodiment of this application;
FIG. 9 shows a schematic structural diagram IV of a Gap conflict processing apparatus according to an embodiment of this application;
FIG. 10 shows a schematic structural diagram of a communication device according to an embodiment of this application;
FIG. 11 shows a schematic structural diagram of a terminal according to an embodiment of this application; and
FIG. 12 shows a schematic structural diagram of a network side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

This specification and claims of this application, and terms "first" and "second" are used to distinguish similar objects, but are unnecessarily used to describe a specific sequence or order. It should be understood that terms used like this is interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

It is worth noting that the technology described in the embodiments of this application is not limited to a long term evolution (Long Term Evolution, LTE)/LTE Evolution (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology can be applied to both the aforementioned systems and radio technologies, as well as other systems and radio technologies. The following describes a New Radio (New Radio, NR) system for the example purpose and uses the term NR in most of the following descriptions. However, these technologies can also be applied to applications other than the NR system application, such as a 6th generation (6th Generation, 6G) communication system.

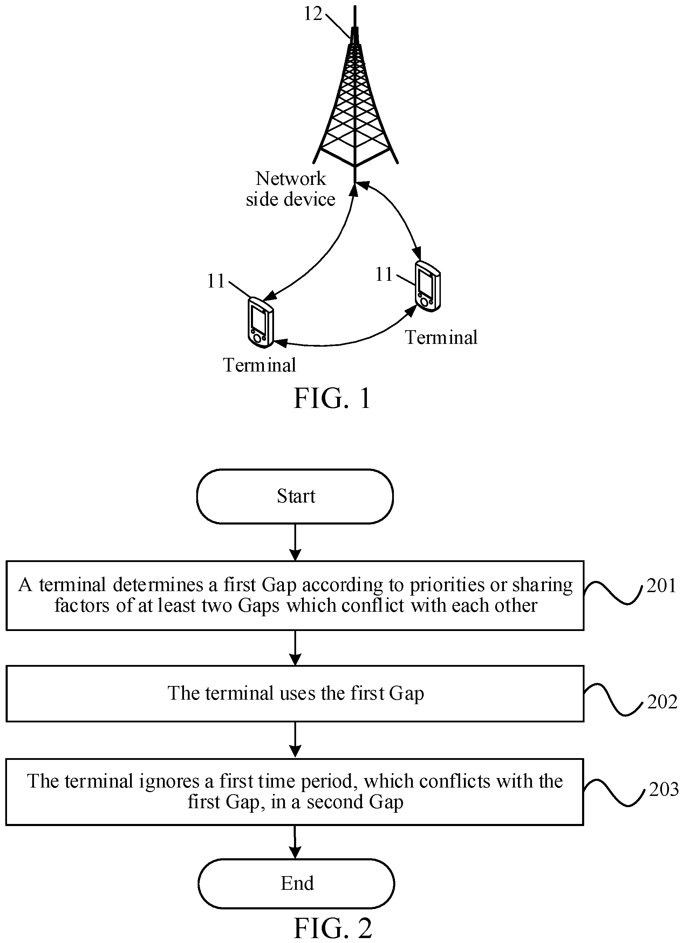

FIG. 1 shows a block diagram of a wireless communication system applicable to an embodiment of this application. The wireless communication system includes a terminal 11 and a network side device 12. The terminal 11 can be a mobile phone, a tablet personal computer (Tablet Personal Computer), a laptop computer (Laptop Computer) or also referred to as a laptop, a personal digital assistant (Personal Digital Assistant, PDA), a handheld computer, a netbook, ultra-mobile personal computer (Ultra-Mobile Personal Computer, UMPC), a mobile internet device (Mobile Internet Device, MID), an augmented reality (augmented reality, AR)/virtual reality (Augmented Reality, VR) device, a robot, a wearable device (Wearable Device), vehicle user equipment (Vehicle User Equipment, VUE), pedestrian user equipment (Pedestrian User Equipment, PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart hand ring, a smart headphone, smart glasses, a smart jewelry (a smart bracelet, a smart ring, a smart necklace, a smart bangle, a smart anklet, and the like), a smart wristband, smart clothing, and the like. It should be noted, in the embodiments of this application, a specific type of the terminal 11 is not limited. The network side device 12 may include an access network device or a core network device. The access network device 12 may also be referred to as a radio access network device, a radio access network (Radio Access Network, RAN), a radio access network function, or a radio access network unit. The radio access network device 12 can include a base station, a wireless local area network (Wireless Local Area Networks, WLAN) access point, a WiFi node, and the like. The base station can be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary. It should be noted that, in the embodiments of this application, only the base station in the NR system is taken as an example, but a specific type of the base station is not limited.

A Gap conflict processing method according to an embodiment of this application is described below through some embodiments and their application scenarios in combination with the accompanying drawings.

As shown in FIG. 2, the embodiments of this application provide a Gap conflict processing method, including the following steps:

Step 201, a terminal determines a first Gap according to priorities or sharing factors of at least two Gaps which conflict with each other. The first Gap is any one of the following: a Gap, having the highest priority, of the two Gaps which conflict with each other; and a Gap, having the lowest sharing factor, of the two Gaps which conflict with each other.

Step 202, the terminal uses the first Gap.

The terminal uses the first Gap, which may be understood as: The terminal performs an operation or a task corresponding to the first Gap within the first Gap. Or, the terminal performs measurement of a measurement object associated with the first Gap within the first Gap.

Step 203, the terminal ignores a first time period, which conflicts with the first Gap, in a second Gap. The second Gap is a Gap which conflicts with the first Gap.

The terminal ignores a first time period of a second Gap, which may be understood as: The terminal stops performing the corresponding operation or task in the first time period of the second Gap, or the terminal stops performing measurement of a measurement object associated with the second Gap in the first time period of the second Gap.

In a case that at least two Gaps partially overlap, or at least two Gaps fully overlap, or a time distance between at least two Gaps is less than a preset threshold, it is determined that the at least two Gaps conflict with each other.

The Gap referred to in the embodiments of this application may also be referred to as a Gap occasion. The network configures a Gap Pattern (Gap pattern or Gap template) or a Gap Configuration. One Gap Pattern or Gap Configuration includes at least one Gap occasion. For example, a periodic Gap may have Gap occasions that occur periodically, and an aperiodic Gap may have only one Gap occasion.

In at least one embodiment of this application, the method further includes the following steps:
The terminal uses a second time period, which does not conflict with the first Gap, in the second Gap;
   or,
the terminal ignores the second time period, which does not conflict with the first Gap, in the second Gap.

The terminal uses a second time period of the second Gap, which may be understood as: The terminal performs an operation or a task corresponding to the second Gap in the second time period of the second Gap. Or, the terminal performs measurement of a measurement object associated with the second Gap in the second time period of the second Gap.

The terminal ignores the second time period of the second Gap, which may be understood as: The terminal stops performing the corresponding operation or task in the second time period of the second Gap, or the terminal stops performing measurement of the measurement object associated with the second Gap in the second time period of the second Gap.

As an optional embodiment, in a case that the terminal ignores the second time period, which does not conflict with the first Gap, in the second Gap, the method further includes the following step:

The terminal performs data transmission in the second time period.

It should be noted, the terminal and a network side device should reach an agreement on the processing of the first Gap and the second Gap, that is, the terminal and the network side device process the first Gap in the same way and also process the first time period and the second time period of the second Gap in the same way, thereby avoiding data loss. Furthermore, since the terminal and the network side device can perform the data transmission in the second time period, which does not conflict with the first Gap, in the second Gap, the data transmission efficiency can be improved, and the Gap use efficiency can be further improved.

In at least one embodiment of this application, priorities of the at least two Gaps which conflict with each other may be determined by means of an implicit indication or may be determined by means of an explicit indication.

In the implicit indication method for the priorities, in at least one embodiment of this application, the method further includes the following steps:

The terminal determines a priority of the Gap according to related information of a Gap, wherein the related information of the Gap includes at least one of:
a Gap purpose (Gap purpose);
an association degree between the Gap and a measurement object or a radio access type;
a Gap parameter; and
a Gap type.

As an optional embodiment, the terminal determines a priority of the Gap according to a Gap purpose, which includes:
the terminal determines that the priority of a task-related Gap is higher than the priority of a Gap for another purpose. The task-related Gap includes at least one of:
a MUSIM periodic Gap;
a MUSIM paging Gap;
a MUSIM aperiodic Gap;
a Gap for a signaling process, for example, a Gap for a MUSIM signaling process; and
a Gap for positioning measurement. For example, the positioning measurement includes positioning measurements based on a positioning reference signal (PRS).

It should be noted, the MUSIM mentioned in the embodiments of this application may include: multi subscriber identity modules (Multi Subscriber Identity Module, Multi-SIM), or multi universal subscriber identity modules (Multi Universal Subscriber Identity Module, Multi-USIM). For ease of explanation, it is hereinafter collectively referred to as MUSIM.

In implementation, a MUSIM Gap may be used for an SIM card task of a MUSIM terminal. The MUSIM terminal may contain a plurality of UEs. These UEs may be referred to as Multi-SIM UEs or Multi-USIM UEs. UE may be regarded as a subscriber. In practical applications, one terminal device may be configured with a plurality of subscribers, and the subscribers may be embodied by SIM cards or USIM cards. Generally, one SIM card corresponds to a subscriber of one network. The SIM card or USIM card saves an identifier of its corresponding subscriber, namely, the identifier of the UE, such as Subscription Permanent Identifier (Subscription Permanent Identifier, SUPI), International Mobile Subscription Identity (International Mobile Subscription Identity, IMSI), or the like. Correspondingly, when a plurality of SIM cards is plugged into one terminal or a plurality of pieces of electronic SIM card information are configured in one terminal, it can be considered that the terminal may constitute different UEs with different subscribers. In the embodiments of this application, if one UE in the MUSIM terminal can use a Gap to perform tasks of other UEs, it can be considered that the purpose of the Gap is a MUSIM purpose.

As another optional embodiment, the terminal determines a priority of the Gap according to a Gap purpose, which includes:

The terminal determines that the priority of the MUSIM Gap is higher than the priority of the Gap for another purpose. The MUSIM Gap includes at least one of:
a MUSIM periodic Gap; and
a MUSIM aperiodic Gap.

In a case that the Gaps which conflict with each other include at least one MUSIM Gap, the priorities of the various Gaps meet at least one condition as follows:
the MUSIM aperiodic Gap has a high priority;
the MUSIM periodic Gap has a high priority;
the MUSIM Gap with a specific cycle length has a high priority, for example, the MUSIM Gap with a DRX Cycle has a higher priority, and without loss of generality, the DRX Cycle includes {320, 640, 1280, 2560} ms; and
the dedicated MUSIM Gap has a high priority.

Optionally, in a case that there are a plurality of MUSIM periodic Gaps, or a plurality of MUSIM Gaps with specific cycle lengths, or a plurality of dedicated MUSIM Gaps, the network may further configure at least one priority indication for the MUSIM Gap.

For example, in a case that the MUSIM Gaps (MUSIM gap) partially overlap, the terminal does not ignore a non-overlapping time period, that is, the terminal continues to perform an associated operation in the non-overlapping time period. Or, the terminal ignores the non-overlapping time period, namely, the terminal stops performing the associated operation in the non-overlapping time period. Further, the terminal may perform data transmission in the non-overlapping time period.

As another optional embodiment, the terminal determines a priority of the Gap according to a Gap purpose, which includes:

The terminal determines that the priority of the Gap for positioning measurement is higher than the priority of the Gap for another purpose.

In a case that the Gaps which conflict with each other include at least one Gap for positioning measurement, the method further includes the following step:

The terminal determines that a first Gap pattern for positioning measurement has a high priority. For example, the first Gap pattern is: Gap pattern 24#, and/or, Gap pattern 25#.

For example, in a case of partial overlapping, the Gap for positioning measurement has a higher priority. That is, in a case that another Gap conflicts with the Gap for positioning measurement, the Gap for positioning measurement has a higher priority. That is, the Gap for positioning measurement is the first Gap mentioned above.

For another example, in a case that the Gaps for positioning measurement partially overlap, the terminal does not ignore a non-overlapping time period, that is, the terminal continues to perform an associated operation in the non-overlapping time period. Or, the terminal ignores the non-overlapping time period, namely, the terminal stops performing the associated operation in the non-overlapping time period. Further, the terminal may perform data transmission in the non-overlapping time period.

In at least one embodiment of this application, the terminal determines a priority of the Gap according to an association degree between a Gap and a measurement object or a radio access type, which includes:

The terminal determines that the priority of the Gap used only for a first measurement object or a first radio access type is higher than the priorities of other Gaps.

For example, in a case that a measurement Gap is used purely for specific measurement objects or specific radio access types (RATs), the Gap has a higher priority. Or, a Gap that is exclusively associated with only one measurement object has a higher priority. Or, a Gap that is exclusively associated with measured objects or RATs has a higher priority than a non-exclusively associated Gap. The non-exclusive association means that a measurement object associated by the Gap is associated to a plurality of Gaps.

Optionally, the association degree between a Gap and a measurement object or a radio access type may be indicated by a Gap-based configuration of the network.

In at least one embodiment of this application, the Gap parameter includes: at least one of a repetition cycle of the Gap, a Gap length, and Gap start time. The terminal determines a priority of the Gap according to a Gap parameter, which includes:
the terminal determines that the priority of the Gap with a large cycle is higher than the priority of the Gap with a small cycle;
   or,
the terminal determines that the priority of the Gap with a small length is higher than the priority of the Gap with a large length;
   or,
the terminal determines that the priority of the Gap with early start time is higher than the priority of the Gap with late start time. For example, among at least two Gaps that partially overlap, the Gap with the early start time has a higher priority. For another example, among at least two Gaps with time distances less than a preset threshold, the Gap with early start time has a higher priority;
   or,
the terminal determines that the Gap of which a ratio of a time length of a conflicting part to the Gap is smaller has a higher priority. For example, the conflicting part of Gap1 accounts for 80% of Gap1, and the conflicting part of Gap2 accounts for 20% of Gap2. At this time, Gap1 cannot be used, and it can be considered that Gap2 has a high priority. The terminal discards Gap1 and uses Gap2.

Further, in addition to a purpose requirement of the Gap or in addition to the dedicated MUSIM Gap, the terminal determines that the priority of the Gap with early start time is higher than the priority of the Gap with late start time.

In at least one embodiment of this application, the Gap type includes at least one of:
a preconfigured Gap;
a parallel Gap;
a Gap configured with an association relationship;
a network controlled small Gap (Network Controlled Small Gap, NCSG);
an autonomous Gap (Autonomous Gap);
a positioning Gap for positioning measurement;
a MUSIM Gap (MUSIM Gap);
an uplink Gap, wherein during the uplink Gap, the terminal stops uplink transmission;
a measurement Gap not configured with an association relationship;
a Gap of a master cell group (Master Cell Group, MCG); and
a Gap of a secondary cell group (Secondary Cell Group, SCG).

The terminal determines a priority of the Gap according to a Gap type, which includes at least one of:
For a per-UE Gap, the terminal determines that the priority of the Gap of the master cell group is higher than the priority of the Gap of the secondary cell group;
the terminal determines that the priority of the network controlled small Gap is lower than the priorities of other types of Gaps;
the terminal determines that the priority of the network controlled small Gap is higher than the priority of the autonomous Gap; and
the terminal determines that the priority of the measurement Gap not configured with an association relationship (traditional measurement Gap, Legacy MG) is higher than the priority of the autonomous Gap.

Optionally, for a per-UE Gap, the terminal may transmit data in an ignored non-overlapping part (namely, the second time period which does not conflict with the first Gap) of the Gap.

Optionally, a non-overlapping part of the autonomous Gap is not ignored. In a case of the autonomous Gap of the second Gap, the terminal performs an associated operation of the autonomous Gap in a non-overlapping time period of the autonomous Gap.

In a case that the Gaps which conflict with each other include at least one network controlled small Gap, the method further includes at least one of the following:

In a case that a visible interruption length (visible interruption length, VIL) included in the network controlled small Gap does not conflict with the first Gap, the terminal skips ignoring the VIL. That is, a non-overlapping VIL cannot be ignored.

In a case that a part or an entirety of a measurement length (Measurement Length, ML) included in the network controlled small Gap conflicts with the first Gap, and the first Gap is a per-UE Gap or a Gap with the same frequency range as the network controlled small Gap, the terminal skips transmitting data in the conflicted ML part. That is, the ML has a lower priority, and the terminal cannot transmit data during per-UE or same per-FR gap overlapping.

For example, an agreement is made on the priorities of the Gaps which conflict with each other: Without loss of generality, the priorities are represented by H, M, and L, respectively meaning high, medium, and low. The priorities of the various Gaps are as shown in Table 1:
Conflict type Measurement Gap Positioning measurement Gap MUSIM Gap
Fully overlapping FO L M H
Fully-partially overlapping FPO L M H
Partially-Fully overlapping PFO L M H
Partial-partial overlapping PPO L M H
Near Gap L M H
Table 1

In the explicit indication method for the priorities, in at least one embodiment of this application, the method further includes the following steps:
The terminal receives first configuration information sent by a network side device, wherein the first configuration information includes: priority indication information of the Gap.

The terminal determines the priority of the Gap according to the first configuration information, wherein the priority indication information is used for indicating a priority level of the Gap, or a priority value of the Gap.

For example, the priority level of each Gap includes high, medium, low, and the like. The priority value of each Gap is {0-10}.

Optionally, the network configures the priorities in Gap configurations, such as, high, medium, and low priorities.

Further, only the high and medium priorities are configured, a default priority is the low priority. Further, only the medium and low priorities are configured, a default priority is the low priority.

Optionally, the network configures the priority value such as {0-10} in the Gap configuration. Or, a default priority is 0, which is either a low priority or a high priority, and the network configures the priority value of { 1-10}.

Optionally, the network side device configures the priority of the Gap according to the Gap type, and further indicates the priority to the terminal through the first configuration information. The first configuration information may be transmitted through measurement configuration information or a system message. This is not specifically limited here.

In at least one embodiment of this application, the method further includes the following steps:
the terminal receives second configuration information sent by a network side device, wherein the second configuration information includes: the sharing factors (Sharing Factor) corresponding to the various Gaps, or the sharing factors (Sharing Factor) corresponding to various Gap types; and or a MeasGapSharingScheme (MeasGapSharingScheme). A value of the MeasGapSharingScheme corresponds to a value of the sharing factor.

Without loss of generality, the value of the sharing factor is any percentage and integer between 0 and 100%, including 0, 1, and 100%.

The terminal determines, according to the second configuration information, the sharing factors of the various Gaps which conflict each other. The terminal discards Gaps with relatively large sharing factors.

Optionally, the network side device configures the sharing factor of the Gap according to the Gap type, and further indicates the sharing factor to the terminal through the second configuration information. The second configuration information may be transmitted through measurement configuration information or a system message. This is not specifically limited here.

Optionally, the method further includes the following step:

The terminal determines a target time length suitable for the sharing factors of the various Gaps, wherein the target time length is configured by a network or pre-appointed. Optionally, the target time length may also be referred to as a time window.

For example, the target length is a predefined duration, such as 10.24 seconds; or, the target time length may be defined as a duration including N largest Gap cycles T. That is, the target time length W = N * T. Where N is configured by the network.

In summary, the terminal and the network side device in the embodiments of this application determine a first Gap according to priorities or sharing factors of at least two Gaps which conflict with each other; and the terminal and the network side device use the first Gap and ignore a first time period, which conflicts with the first Gap, in a second Gap. The second Gap is a Gap which conflicts with the first Gap. Thus, the terminal and the network side device reach an agreement on the use of the Gaps which conflict with each other, thereby improving the Gap use efficiency, improving the data transmission efficiency, and avoiding data loss.

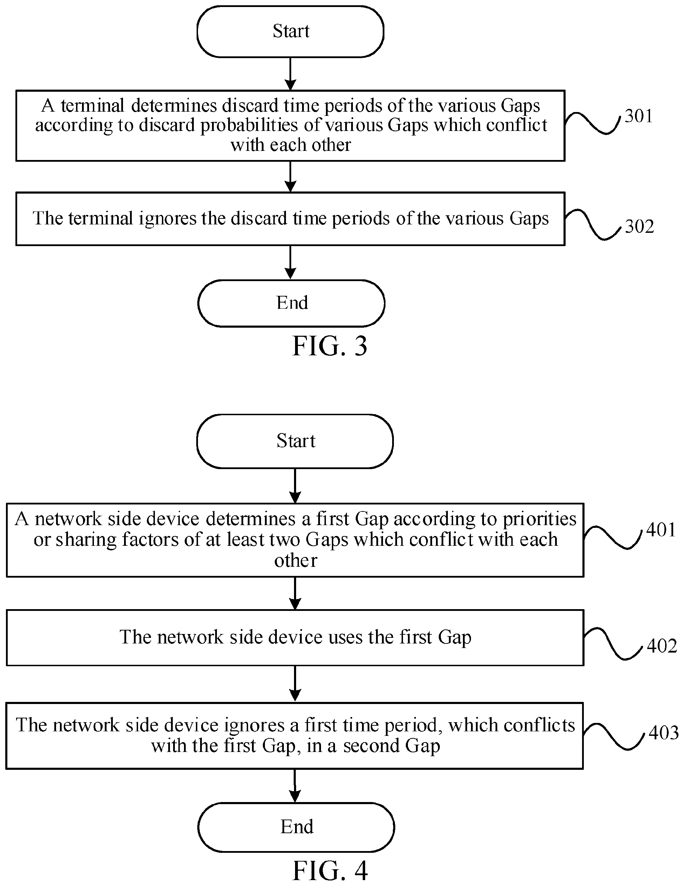

As shown in FIG. 3, the embodiments of this application further provides a Gap conflict processing method, including the following steps:

Step 301, a terminal determines discard time periods of the various Gaps according to discard probabilities of various Gaps which conflict with each other.

Step 302, the terminal ignores the discard time periods of the various Gaps.

The terminal ignores the discard time periods of the various Gaps, which may be understood as: The terminal stops performing corresponding operations or tasks in the discard time periods of the various Gaps, or the terminal stops performing measurement of measurement objects associated with the Gaps in the discard time periods of the various Gaps.

Optionally, the terminal uses non-discard time periods of the various Gaps. The non-discard time period of a Gap may be understood as a non-discard time period in a Gap occasion. The terminal uses non-discard time periods of the various Gaps, which may be understood as: The terminal performs operations or tasks corresponding to the Gaps in the non-discard time periods of the various Gaps. Or, the terminal performs measurement of measurement objects associated with the Gaps in the non-discard time periods of the various Gaps.

In a case that at least two Gaps partially overlap, or at least two Gaps fully overlap, or a time distance between at least two Gaps is less than a preset threshold, it is determined that the at least two Gaps conflict with each other.

For example, at least two Gaps which conflict with each other are Gap 1 and Gap2. If a discard rate of Gap1 is 30%, and a discard rate of Gap is 70%, the discard time period of Gap1 is 30% of a total time length of Gap1 and the discard time period of Gap2 is 70% of a total time length of Gap2. Start positions or end positions of the discard time periods of the various Gaps are pre-appointed by the terminal and a network.

Optionally, each Gap calculates its own Gap discard rate. The terminal maintains the discard rate of the Gap not greater than a sharing factor of the Gap. The network needs to configure an appropriate sharing factor according to an actual situation.

In at least one embodiment of this application, the method further includes the following steps:

The terminal determines the discard probabilities of the various Gaps according to sharing factors of the various Gaps. The discard probability of a Gap is a ratio of the sharing factor of the Gap to a sum of the sharing factors of all the Gaps which conflict with each other.

For example, the sharing factor of Gap1 is X1, and the sharing factor of Gap2 is X2. The discard probability of Gap1 is: X1/(X1+X2) * 100%; and the discard probability of Gap2 is: X2/(X1+X2) * 100%.

In at least one embodiment of this application, the method further includes the following steps:
The terminal receives third configuration information sent by a network side device, wherein the third configuration information includes: the sharing factors corresponding to the various Gaps, or the sharing factors corresponding to various Gap types; and
the terminal determines, according to the third configuration information, the sharing factors of the various Gaps which conflict each other.

Optionally, the network side device configures the sharing factor of the Gap according to the Gap type, and further indicates the sharing factor to the terminal through the third configuration information. The third configuration information may be transmitted through measurement configuration information or a system message. This is not specifically limited here.

In summary, the terminal and the network side device in the embodiments of this application determine the discard time periods of the various Gaps according to the discard probabilities of the various Gaps which conflict with each other; and ignore the discard time periods of the various Gaps. Thus, the terminal and the network side device reach an agreement on the use of the Gaps which conflict with each other, thereby improving the Gap use efficiency, improving the data transmission efficiency, and avoiding data loss.

As shown in FIG. 4, the embodiments of this application further provide a Gap conflict processing method, including the following steps:
Step 401, a network side device determines a first Gap according to priorities or sharing factors of at least two Gaps which conflict with each other. The first Gap is any one of the following: a Gap, having the highest priority, of the two Gaps which conflict with each other; and a Gap, having the lowest sharing factor, of the two Gaps which conflict with each other.

Step 402, the network side device uses the first Gap.

The network side device uses the first Gap, which may be understood as: The network side device performs an operation or a task corresponding to the first Gap within the first Gap. Or, the network side device performs measurement of a measurement object associated with the first Gap within the first Gap.

Step 403, the network side device ignores a first time period, which conflicts with the first Gap, in a second Gap, wherein the second Gap is a Gap which conflicts with the first Gap.

The network side device ignores a first time period of a second Gap, which may be understood as: The network side device stops performing the corresponding operation or task in the first time period of the second Gap, or the network side device stops performing measurement of a measurement object associated with the second Gap in the first time period of the second Gap.

In a case that at least two Gaps partially overlap, or at least two Gaps fully overlap, or a time distance between at least two Gaps is less than a preset threshold, it is determined that the at least two Gaps conflict with each other.

The Gap referred to in the embodiments of this application may also be referred to as a Gap occasion. The network configures a Gap Pattern (Gap pattern or Gap template) or a Gap Configuration. One Gap Pattern or Gap Configuration includes at least one Gap occasion. For example, a periodic Gap may have Gap occasions that occur periodically, and an aperiodic Gap may have only one Gap occasion.

In at least one embodiment of this application, the method further includes the following steps:
The network side device uses a second time period, which does not conflict with the first Gap, in the second Gap;
   or,
the network side device ignores the second time period, which does not conflict with the first Gap, in the second Gap.

The network side device uses a second time period of the second Gap, which may be understood as: The network side device performs an operation or a task corresponding to the second Gap in the second time period of the second Gap. Or, the network side device performs measurement of a measurement object associated with the second Gap in the second time period of the second Gap.

The network side device ignores the second time period of the second Gap, which may be understood as: The network side device stops performing the corresponding operation or task in the second time period of the second Gap, or the network side device stops performing measurement of the measurement object associated with the second Gap in the second time period of the second Gap.

As an optional embodiment, in a case that the network side device ignores the second time period, which does not conflict with the first Gap, in the second Gap, the method further includes the following step:

The network side device performs data transmission in the second time period.

It should be noted, the terminal and a network side device should reach an agreement on the processing of the first Gap and the second Gap, that is, the terminal and the network side device process the first Gap in the same way and also process the first time period and the second time period of the second Gap in the same way, thereby avoiding data loss. Furthermore, since the terminal and the network side device can perform the data transmission in the second time period, which does not conflict with the first Gap, in the second Gap, the data transmission efficiency can be improved, and the Gap use efficiency can be further improved.

In at least one embodiment of this application, priorities of the at least two Gaps which conflict with each other may be determined by means of an implicit indication or may be determined by means of an explicit indication.

In the implicit indication method for the priorities, in at least one embodiment of this application, the method further includes the following steps:
The network side device determines a priority of the Gap according to related information of a Gap; wherein the related information of the Gap includes at least one of:
a Gap purpose (Gap purpose);
an association degree between the Gap and a measurement object or a radio access type;
a Gap parameter; and
a Gap type.

As an optional embodiment, the network side device determines a priority of the Gap according to a Gap purpose, which includes:
The network side device determines that the priority of a task-related Gap is higher than the priority of a Gap for another purpose. The task-related Gap includes at least one of:
a MUSIM (MUSIM) periodic Gap;
a MUSIM paging Gap;
a MUSIM aperiodic Gap;
a Gap for a signaling process, for example, a Gap for a MUSIM signaling process; and
a Gap for positioning measurement.

As another optional embodiment, the network side device determines a priority of the Gap according to a Gap purpose, which includes:
The network side device determines that the priority of the MUSIM Gap is higher than the priority of the Gap for another purpose. The MUSIM Gap includes at least one of:
a MUSIM periodic Gap; and
a MUSIM aperiodic Gap.

In a case that the Gaps which conflict with each other include at least one MUSIM Gap, the priorities of the various Gaps meet at least one condition as follows:
the MUSIM aperiodic Gap has a high priority;
the MUSIM periodic Gap has a high priority;
the MUSIM Gap with a specific cycle length has a high priority, for example, the MUSIM Gap with a cycle of {320, 640, 1280, 2560} ms has a higher priority; and
the dedicated MUSIM Gap has a high priority.

Optionally, in a case that there are a plurality of MUSIM periodic Gaps, or a plurality of MUSIM Gaps with specific cycle lengths, or a plurality of dedicated MUSIM Gaps, the network may further configure at least one priority indication for the MUSIM Gap.

For example, in a case that the MUSIM Gaps (MUSIM gap) partially overlap, the network side device does not ignore a non-overlapping time period, that is, the network side device continues to perform an associated operation in the non-overlapping time period. Or, the network side device ignores the non-overlapping time period, namely, the network side device stops performing the associated operation in the non-overlapping time period. Further, the network side device may perform data transmission in the non-overlapping time period.

As another optional embodiment, the network side device determines a priority of the Gap according to a Gap purpose, which includes:
The network side device determines that the priority of the Gap for positioning measurement is higher than the priority of the Gap for another purpose.

In a case that the Gaps which conflict with each other include at least one Gap for positioning measurement, the method further includes the following step:
The network side device determines that a first Gap pattern for positioning measurement has a high priority. For example, the first Gap pattern is: Gap pattern 24#, and/or, Gap pattern 25#.

For example, in a case of partial overlapping, the Gap for positioning measurement has a higher priority. That is, in a case that another Gap conflicts with the Gap for positioning measurement, the Gap for positioning measurement has a higher priority. That is, the Gap for positioning measurement is the first Gap mentioned above.

For another example, in a case that the Gaps for positioning measurement partially overlap, the network side device does not ignore a non-overlapping time period, that is, the network side device continues to perform an associated operation in the non-overlapping time period. Or, the network side device ignores the non-overlapping time period, namely, the network side device stops performing the associated operation in the non-overlapping time period. Further, the network side device may perform data transmission in the non-overlapping time period.

In at least one embodiment of this application, the network side device determines a priority of the Gap according to an association degree between a Gap and a measurement object or a radio access type, which includes:
The network side device determines that the priority of the Gap used only for a first measurement object or a first radio access type is higher than the priorities of other Gaps.

For example, in a case that a measurement Gap is used purely for specific measurement objects or specific radio access types (RATs), the Gap has a higher priority. Or, a Gap that is exclusively associated with only one measurement object has a higher priority. Or, a Gap that is exclusively associated with measured objects or RATs has a higher priority than a non-exclusively associated Gap. The non-exclusive association means that a measurement object associated by the Gap is associated to a plurality of Gaps.

Optionally, the association degree between a Gap and a measurement object or a radio access type may be indicated by a Gap-based configuration of the network.

In at least one embodiment of this application, the Gap parameter includes: at least one of a repetition cycle of the Gap, a Gap length, and Gap start time. The network side device determines a priority of the Gap according to a Gap parameter, which includes:
The network side device determines that the priority of the Gap with a large cycle is higher than the priority of the Gap with a small cycle;
   or,
the network side device determines that the priority of the Gap with a small length is higher than the priority of the Gap with a large length;
   or,
the network side device determines that the priority of the Gap with early start time is higher than the priority of the Gap with late start time. For example, among at least two Gaps that partially overlap, the Gap with the early start time has a higher priority. For another example, among at least two Gaps with time distances less than a preset threshold, the Gap with early start time has a higher priority;
   or,
the network side device determines that the Gap of which a ratio of a time length of a conflicting part to the Gap is smaller has a higher priority. For example, the conflicting part of Gap 1 accounts for 80% of Gap 1, and the conflicting part of Gap2 accounts for 20% of Gap2. At this time, Gap 1 cannot be used, and it can be considered that Gap2 has a high priority. The network side device discards Gap1 and uses Gap2.

Further, in addition to a purpose requirement of the Gap or in addition to the dedicated MUSIM Gap, the network side device determines that the priority of the Gap with early start time is higher than the priority of the Gap with late start time.

In at least one embodiment of this application, the Gap type includes at least one of:
a preconfigured Gap;
a parallel Gap;
a Gap configured with an association relationship;
a network controlled small Gap (Network Controlled Small Gap, NCSG);
an autonomous Gap (Autonomous Gap);
a positioning Gap for positioning measurement;
a MUSIM Gap (MUSIM Gap);
an uplink Gap, wherein during the uplink Gap, the network side device stops uplink transmission;
a measurement Gap not configured with an association relationship;
a Gap of a master cell group (Master Cell Group, MCG); and
a Gap of a secondary cell group (Secondary Cell Group, SCG).

The network side device determines a priority of the Gap according to a Gap type, which includes at least one of:
For a per-UE Gap, the network side device determines that the priority of the Gap of the master cell group is higher than the priority of the Gap of the secondary cell group;
the network side device determines that the priority of the network controlled small Gap is lower than the priorities of other types of Gaps;
the network side device determines that the priority of the network controlled small Gap is higher than the priority of the autonomous Gap; and
the network side device determines that the priority of the measurement Gap not configured with an association relationship (traditional measurement Gap, Legacy MG) is higher than the priority of the autonomous Gap.

Optionally, for a per-UE Gap, the network side device may transmit data in an ignored non-overlapping part (namely, the second time period which does not conflict with the first Gap) of the Gap.

Optionally, a non-overlapping part of the autonomous Gap is not ignored. In a case of the autonomous Gap of the second Gap, the network side device performs an associated operation of the autonomous Gap in a non-overlapping time period of the autonomous Gap.

In a case that the Gaps which conflict with each other include at least one network controlled small Gap, the method further includes at least one of the following:
In a case that a visible interruption length (Visible interruption length, VIL) included in the network controlled small Gap does not conflict with the first Gap, the network side device skips ignoring the VIL. That is, a non-overlapping VIL cannot be ignored.

In a case that a part or an entirety of a measurement length (Measurement Length, ML) included in the network controlled small Gap conflicts with the first Gap, and the first Gap is a per-UE Gap or a Gap with the same frequency range as the network controlled small Gap, the network side device skips transmitting data in the conflicted ML part. That is, the ML has a lower priority, and the network side device cannot transmit data during per-UE or same per-FR gap overlapping.

In the explicit indication method for the priorities, in at least one embodiment of this application, the method further includes the following steps:
The network side device sends first configuration information to a terminal, wherein the first configuration information includes: priority indication information of the Gap. The priority indication information is used for indicating a priority level of the Gap, or a priority value of the Gap.

For example, the priority level of each Gap includes high, medium, low, and the like. The priority value of each Gap is {0-10}.

Optionally, the network configures the priorities in Gap configurations, such as, high, medium, and low priorities.

Further, only the high and medium priorities are configured, a default priority is the low priority. Further, only the medium and low priorities are configured, a default priority is the low priority.

Optionally, the network configures the priority value such as {0-10} in the Gap configuration. Or, a default priority is 0, which is either a low priority or a high priority, and the network configures the priority value of { 1-10}.

Optionally, the network side device configures the priority of the Gap according to the Gap type, and further indicates the priority to the terminal through the first configuration information. The first configuration information may be transmitted through measurement configuration information or a system message. This is not specifically limited here.

In at least one embodiment of this application, the method further includes the following steps:
The network side device determines the sharing factors of the various Gaps, and sends second configuration information to the terminal, wherein the second configuration information includes: the sharing factors corresponding to the various Gaps, or the sharing factors corresponding to various Gap types.

Optionally, the network side device configures the sharing factor of the Gap according to the Gap type, and further indicates the sharing factor to the terminal through the second configuration information. The second configuration information may be transmitted through measurement configuration information or a system message. This is not specifically limited here.

Optionally, the method further includes the following step:
The network side device determines a target time length suitable for the sharing factors of the various Gaps, wherein the target time length is determined by a network or pre-appointed. Optionally, the target time length may also be referred to as a time window.

For example, the target length is a predefined duration, such as 10.24 seconds; or, the target time length may be defined as a duration including N largest Gap cycles T. That is, the target time length W = N * T. Where N is configured by the network.

In summary, the terminal and the network side device in the embodiments of this application determine a first Gap according to priorities or sharing factors of at least two Gaps which conflict with each other; and the terminal and the network side device use the first Gap and ignore a first time period, which conflicts with the first Gap, in a second Gap, wherein the second Gap is a Gap which conflicts with the first Gap. Thus, the terminal and the network side device reach an agreement on the use of the Gaps which conflict with each other, thereby improving the Gap use efficiency, improving the data transmission efficiency, and avoiding data loss.

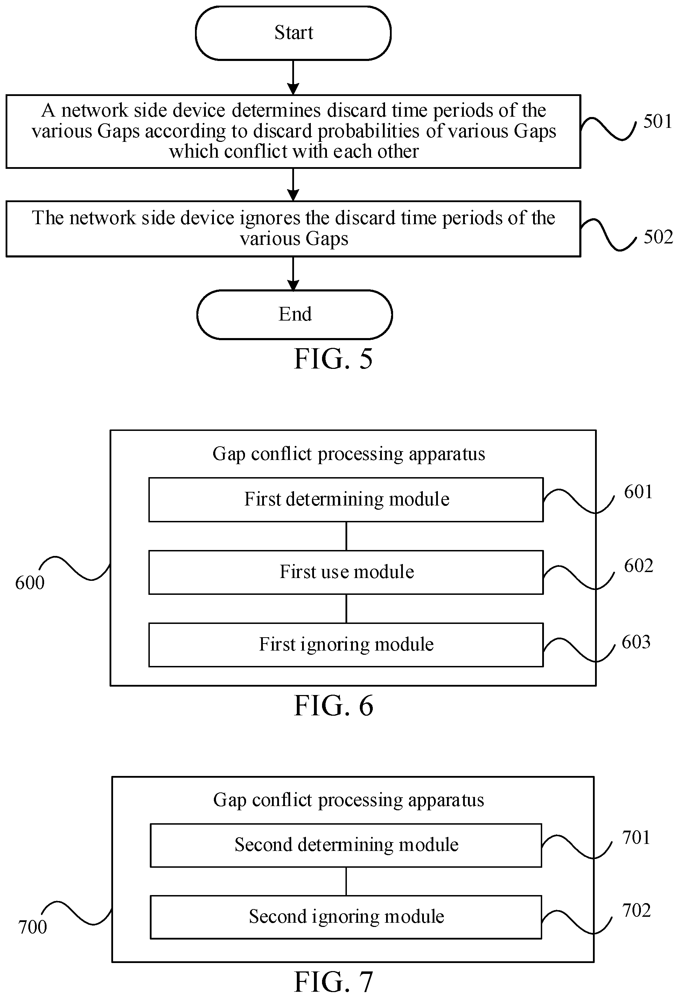

As shown in FIG. 5, the embodiments of this application further provides a Gap conflict processing method, including the following steps:
Step 501, a network side device determines discard time periods of the various Gaps according to discard probabilities of various Gaps which conflict with each other.

Step 502, the network side device ignores the discard time periods of the various Gaps.

Optionally, the network side device uses non-discard time periods of the various Gaps. The non-discard time period of a Gap may be a non-discard time period in the Gap. In a case that at least two Gaps partially overlap, or at least two Gaps fully overlap, or a time distance between at least two Gaps is less than a preset threshold, it is determined that the at least two Gaps conflict with each other.

For example, at least two Gaps which conflict with each other are Gap 1 and Gap2. If a discard rate of Gap1 is 30%, and a discard rate of Gap is 70%, the discard time period of Gap1 is 30% of a total time length of Gap1 and the discard time period of Gap2 is 70% of a total time length of Gap2. Start positions or end positions of the discard time periods of the various Gaps are pre-appointed by the terminal and a network.

Optionally, each Gap calculates its own Gap discard rate. The network side device maintains the discard rate of the Gap not greater than a sharing factor of the Gap. The network needs to configure an appropriate sharing factor according to an actual situation.

In at least one embodiment of this application, the method further includes the following steps:
The network side device determines the discard probabilities of the various Gaps according to sharing factors of the various Gaps. The discard probability of a Gap is a ratio of the sharing factor of the Gap to a sum of the sharing factors of all the Gaps which conflict with each other.

For example, the sharing factor of Gap1 is X1, and the sharing factor of Gap2 is X2. The discard probability of Gap1 is: X1/(X1+X2) * 100%; and the discard probability of Gap2 is: X2/(X1+X2) * 100%.

In at least one embodiment of this application, the method further includes the following steps:
The network side device determines the sharing factors of the various Gaps, and sends third configuration information to the terminal, wherein the third configuration information includes: the sharing factors corresponding to the various Gaps, or the sharing factors corresponding to various Gap types.

Optionally, the network side device configures the sharing factor of the Gap according to the Gap type, and further indicates the sharing factor to the terminal through the third configuration information. The third configuration information may be transmitted through measurement configuration information or a system message. This is not specifically limited here.

In summary, the terminal and the network side device in the embodiments of this application determine the discard time periods of the various Gaps according to the discard probabilities of the various Gaps which conflict with each other; and the terminal and the network side device ignore the discard time periods of the various Gaps. Thus, the terminal and the network side device reach an agreement on the use of the Gaps which conflict with each other, thereby improving the Gap use efficiency, improving the data transmission efficiency, and avoiding data loss.

An executive body of the Gap conflict processing method provided by the embodiments of this application may be a Gap conflict processing apparatus. The Gap conflict processing apparatus provided by the embodiments of this application is explained by taking the following as an example: The Gap conflict processing apparatus implements the Gap conflict processing method.

As shown in FIG. 6, the embodiments of this application further provide a Gap conflict processing apparatus 600, including:
a first determining module 601, configured to determine a first Gap according to priorities or sharing factors of at least two Gaps which conflict with each other, wherein the first Gap is any one of the following: a Gap, having the highest priority, of the two Gaps which conflict with each other; and a Gap, having the lowest sharing factor, of the two Gaps which conflict with each other;
a first use module 602, configured to use the first Gap; and
a first ignoring module 603, configured to ignore a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

As an optional embodiment, the apparatus further includes:
a fifth use module, configured to use a second time period, which does not conflict with the first Gap, in the second Gap;
   or,
a fifth ignoring module, configured to ignore the second time period, which does not conflict with the first Gap, in the second Gap.

As an optional embodiment, in a case that the terminal ignores the second time period, which does not conflict with the first Gap, in the second Gap, the apparatus further includes:
a first transmission module, configured to perform data transmission in the second time period.

As an optional embodiment, the apparatus further includes:
a first priority determining module, configured to determine a priority of the Gap according to related information of a Gap, wherein the related information of the Gap includes at least one of:
a Gap purpose;
an association degree between the Gap and a measurement object or a radio access type;
a Gap parameter; and
a Gap type.

As an optional embodiment, the first priority determining module includes:
a first sub-module, configured to determine that the priority of a task-related Gap is higher than the priority of a Gap for another purpose. The task-related Gap includes at least one of:
a MUSIM periodic Gap;
a MUSIM paging Gap;
a MUSIM aperiodic Gap;
a Gap for a signaling process; and
a Gap for positioning measurement.

As an optional embodiment, the first priority determining module includes:
a second sub-module, configured to determine that the priority of the MUSIM Gap is higher than the priority of the Gap for another purpose. The MUSIM Gap includes at least one of:
a MUSIM periodic Gap; and
a MUSIM aperiodic Gap.

As an optional embodiment, in a case that the Gaps which conflict with each other include at least one MUSIM Gap, the priorities of the various Gaps meet at least one condition as follows:
the MUSIM aperiodic Gap has a high priority;
the MUSIM periodic Gap has a high priority;
the MUSIM Gap with a specific cycle length has a high priority; and
the dedicated MUSIM Gap has a high priority.

As an optional embodiment, the first priority determining module includes:
a third sub-module, configured to determine that the priority of the Gap for positioning measurement is higher than the priority of the Gap for another purpose.

As an optional embodiment, in a case that the Gaps which conflict with each other include at least one Gap for positioning measurement, the apparatus further includes:
a fourth sub-module, configured to determine that a first Gap pattern for positioning measurement has a high priority.

As an optional embodiment, the first priority determining module includes:
a fifth sub-module, configured to determine that the priority of the Gap used only for a first measurement object or a first radio access type is higher than the priorities of other Gaps.

As an optional embodiment, the Gap parameter includes: at least one of a repetition cycle of the Gap, a Gap length, and Gap start time. The first priority determining module includes:
a sixth sub-module, configured to determine that the priority of the Gap with a large cycle is higher than the priority of the Gap with a small cycle;
or, configured to determine that the priority of the Gap with a small length is higher than the priority of the Gap with a large length;
or, configured to determine that the priority of the Gap with early start time is higher than the priority of the Gap with late start time;
or, configured to determine that the Gap of which a ratio of a time length of a conflicting part to the Gap is smaller has a higher priority.

As an optional embodiment, the Gap type includes at least one of:
a preconfigured Gap;
a parallel Gap;
a Gap configured with an association relationship;
a network controlled small Gap;
an autonomous Gap;
a positioning Gap for positioning measurement;
a MUSIM Gap;
an uplink Gap;
a measurement Gap not configured with an association relationship;
a Gap of a master cell group; and
a Gap of a secondary cell group.

As an optional embodiment, the first priority determining module includes:
a seventh sub-module, configured to determine that the priority of the Gap of the master cell group is higher than the priority of the Gap of the secondary cell group;
or, configured to determine that the priority of the network controlled small Gap is lower than the priorities of other types of Gaps;
or, configured to determine that the priority of the network controlled small Gap is higher than the priority of the autonomous Gap; and
or, configured to determine that the priority of the measurement Gap not configured with an association relationship is higher than the priority of the autonomous Gap.

As an optional embodiment, in a case that the Gaps which conflict with each other include at least one network controlled small Gap, the apparatus further includes at least one of the following:
a first processing module, configured to: in a case that a visible interruption length (VIL) included in the network controlled small Gap does not conflict with the first Gap, skip ignoring the VIL; and
a second processing module, configured to: in a case that a part or an entirety of a measurement length (ML) included in the network controlled small Gap conflicts with the first Gap, and the first Gap is a per-UE Gap or a Gap with the same frequency range as the network controlled small Gap, skip transmitting data in the conflicted ML part.

As an optional embodiment, the apparatus further includes:
a first receiving module, configured to receive first configuration information sent by a network side device, wherein the first configuration information includes: priority indication information of the Gap; and
a second priority determining module, configured to determine the priority of the Gap according to the first configuration information. The priority indication information is used for indicating a priority level of the Gap, or a priority value of the Gap.

As an optional embodiment, the apparatus further includes:
a second receiving module, configured to receive second configuration information sent by a network side device, wherein the second configuration information includes: the sharing factors corresponding to the various Gaps, or the sharing factors corresponding to various Gap types; and
a first sharing factor determining module, configured to determine, according to the second configuration information, the sharing factors of the various Gaps which conflict each other.

As an optional embodiment, the apparatus further includes:
a first time length determining module, configured to determine a target time length suitable for the sharing factors of the various Gaps, wherein the target time length is configured by a network or pre-appointed.

In the embodiments of this application, the terminal and the network side device determine a first Gap according to priorities or sharing factors of at least two Gaps which conflict with each other; and the terminal and the network side device use the first Gap and ignore a first time period, which conflicts with the first Gap, in a second Gap, wherein the second Gap is a Gap which conflicts with the first Gap. Thus, the terminal and the network side device reach an agreement on the use of the Gaps which conflict with each other, thereby improving the Gap use efficiency, improving the data transmission efficiency, and avoiding data loss.

It should be noted, if the terminal provided by the embodiments of this application is a terminal capable of performing the Gap conflict processing method described above, all the embodiments of the Gap conflict processing method are applicable to the terminal, and the same or similar advantageous effects can be achieved.

As shown in FIG. 7, the embodiments of this application further provides a Gap conflict processing apparatus 700, including:
a second determining module 701, configured to determine discard time periods of the various Gaps according to discard probabilities of various Gaps which conflict with each other; and
a second ignoring module 702, configured to ignore the discard time periods of the various Gaps,
wherein in a case that at least two Gaps partially overlap, or at least two Gaps fully overlap, or a time distance between at least two Gaps is less than a preset threshold, it is determined that the at least two Gaps conflict with each other.

As an optional embodiment, the apparatus further includes:
a discard probability determining module, configured to determine the discard probabilities of the various Gaps according to sharing factors of the various Gaps. The discard probability of a Gap is a ratio of the sharing factor of the Gap to a sum of the sharing factors of all the Gaps which conflict with each other.

As an optional embodiment, the apparatus further includes:
a third receiving module, configured to receive third configuration information sent by a network side device, wherein the third configuration information includes: the sharing factors corresponding to the various Gaps, or the sharing factors corresponding to various Gap types; and
a second sharing factor determining module, configured to determine, according to the third configuration information, the sharing factors of the various Gaps which conflict each other.

The terminal and the network side device in the embodiments of this application determine the discard time periods of the various Gaps according to the discard probabilities of the various Gaps which conflict with each other. The terminal and the network side device ignore the discard time periods of the various Gaps. Thus, the terminal and the network side device reach an agreement on the use of the Gaps which conflict with each other, thereby improving the Gap use efficiency, improving the data transmission efficiency, and avoiding data loss.

It should be noted, if the terminal provided by the embodiments of this application is a terminal capable of performing the Gap conflict processing method described above, all the embodiments of the Gap conflict processing method are applicable to the terminal, and the same or similar advantageous effects can be achieved.

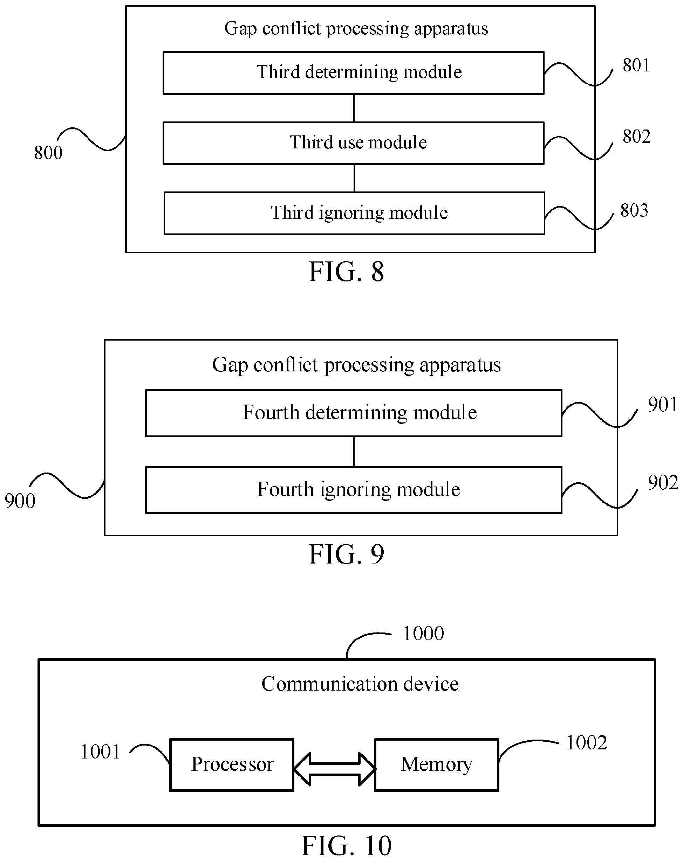

As shown in FIG. 8, the embodiments of this application further provides a Gap conflict processing apparatus 800, including:
a third determining module 801, configured to determine a first Gap according to priorities or sharing factors of at least two Gaps which conflict with each other, wherein the first Gap is any one of the following: a Gap, having the highest priority, of the two Gaps which conflict with each other; and a Gap, having the lowest sharing factor, of the two Gaps which conflict with each other;
a third use module 802, configured to use the first Gap; and
a third ignoring module 803, configured to ignore a first time period, which conflicts with the first Gap, in a second Gap, wherein the second Gap is a Gap which conflicts with the first Gap;
in a case that at least two Gaps partially overlap, or at least two Gaps fully overlap, or a time distance between at least two Gaps is less than a preset threshold, it is determined that the at least two Gaps conflict with each other.

As an optional embodiment, the apparatus further includes:
a sixth use module, configured to use a second time period, which does not conflict with the first Gap, in the second Gap;
   or,
a sixth ignoring module, configured to ignore the second time period, which does not conflict with the first Gap, in the second Gap.

As an optional embodiment, in a case that the network side device ignores the second time period, which does not conflict with the first Gap, in the second Gap, the apparatus further includes:
a second transmission module, configured to perform data transmission in the second time period.

As an optional embodiment, the apparatus further includes:
a third priority determining module, configured to determine a priority of the Gap according to related information of a Gap, wherein the related information of the Gap includes at least one of:
a Gap purpose;
an association degree between the Gap and a measurement object or a radio access type;
a Gap parameter; and
a Gap type.

As an optional embodiment, the third priority determining module includes:
a ninth sub-module, configured to determine that the priority of a task-related Gap is higher than the priority of a Gap for another purpose. The task-related Gap includes at least one of:
a MUSIM periodic Gap;
a MUSIM paging Gap;
a MUSIM aperiodic Gap;
a Gap for a signaling process; and
a Gap for positioning measurement.

As an optional embodiment, the third priority determining module includes:
a tenth sub-module, configured to determine that the priority of the MUSIM Gap is higher than the priority of the Gap for another purpose. The MUSIM Gap includes at least one of:
a MUSIM periodic Gap; and
a MUSIM aperiodic Gap.

As an optional embodiment, in a case that the Gaps which conflict with each other include at least one MUSIM Gap, the priorities of the various Gaps meet at least one condition as follows:
the MUSIM aperiodic Gap has a high priority;
the MUSIM periodic Gap has a high priority;
the MUSIM Gap with a specific cycle length has a high priority; and
the dedicated MUSIM Gap has a high priority.

As an optional embodiment, the third priority determining module includes:
an eleventh sub-module, configured to determine that the priority of the Gap for positioning measurement is higher than the priority of the Gap for another purpose.

As an optional embodiment, in a case that the Gaps which conflict with each other include at least one Gap for positioning measurement, the apparatus further includes:
a twelfth sub-module, configured to determine that a first Gap pattern for positioning measurement has a high priority.

As an optional embodiment, the third priority determining module includes:
a thirteenth sub-module, configured to determine that the priority of the Gap used only for a first measurement object or a first radio access type is higher than the priorities of other Gaps.

As an optional embodiment, the Gap parameter includes: at least one of a repetition cycle of the Gap, a Gap length, and Gap start time. The third priority determining module includes:
a fourteenth sub-module, configured to determine that the priority of the Gap with a large cycle is higher than the priority of the Gap with a small cycle;
or, configured to determine that the priority of the Gap with a small length is higher than the priority of the Gap with a large length;
or, configured to determine that the priority of the Gap with early start time is higher than the priority of the Gap with late start time;
or, configured to determine that the Gap of which a ratio of a time length of a conflicting part to the Gap is smaller has a higher priority.

As an optional embodiment, the Gap type includes at least one of:
a preconfigured Gap;
a parallel Gap;
a Gap configured with an association relationship;
a network controlled small Gap;
an autonomous Gap;
a positioning Gap for positioning measurement;
a MUSIM Gap;
an uplink Gap;
a measurement Gap not configured with an association relationship;
a Gap of a master cell group; and
a Gap of a secondary cell group.

As an optional embodiment, the third priority determining module includes:
a fifteenth sub-module, configured to determine that the priority of the Gap of the master cell group is higher than the priority of the Gap of the secondary cell group;
or, configured to determine that the priority of the network controlled small Gap is lower than the priorities of other types of Gaps;
or, configured to determine that the priority of the network controlled small Gap is higher than the priority of the autonomous Gap; and
or, configured to determine that the priority of the measurement Gap not configured with an association relationship is higher than the priority of the autonomous Gap.

As an optional embodiment, in a case that the Gaps which conflict with each other include at least one network controlled small Gap, the apparatus further includes at least one of the following:
a third processing module, configured to: in a case that a visible interruption length (VIL) included in the network controlled small Gap does not conflict with the first Gap, skip ignoring the VIL; and
a fourth processing module, configured to: in a case that a part or an entirety of a measurement length (ML) included in the network controlled small Gap conflicts with the first Gap, and the first Gap is a per-UE Gap or a Gap with the same frequency range as the network controlled small Gap, skip transmitting data in the conflicted ML part.

As an optional embodiment, the apparatus further includes:
a first sending module, configured to send first configuration information to a terminal, wherein the first configuration information includes: priority indication information of the Gap; and the priority indication information is used for indicating a priority level of the Gap, or a priority value of the Gap.

As an optional embodiment, the apparatus further includes:
a second sending module, configured to determine the sharing factors of the various Gaps, and send second configuration information to the terminal, wherein the second configuration information includes: the sharing factors corresponding to the various Gaps, or the sharing factors corresponding to various Gap types.

As an optional embodiment, the apparatus further includes:
a second time length determining module, configured to determine a target time length suitable for the sharing factors of the various Gaps, wherein the target time length is determined by a network or pre-appointed.

In the embodiments of this application, the terminal and the network side device determine a first Gap according to priorities or sharing factors of at least two Gaps which conflict with each other; and the terminal and the network side device use the first Gap and ignore a first time period, which conflicts with the first Gap, in a second Gap, wherein the second Gap is a Gap which conflicts with the first Gap. Thus, the terminal and the network side device reach an agreement on the use of the Gaps which conflict with each other, thereby improving the Gap use efficiency, improving the data transmission efficiency, and avoiding data loss.

It should be noted, if the terminal provided by the embodiments of this application is a terminal capable of performing the Gap conflict processing method described above, all the embodiments of the Gap conflict processing method are applicable to the terminal, and the same or similar advantageous effects can be achieved.

As shown in FIG. 9, the embodiments of this application further provide a Gap conflict processing apparatus 900, including:
a fourth determining module 901, configured to determine discard time periods of the various Gaps according to discard probabilities of various Gaps which conflict with each other; and
a fourth ignoring module 902, configured to ignore the discard time periods of the various Gaps,
wherein in a case that at least two Gaps partially overlap, or at least two Gaps fully overlap, or a time distance between at least two Gaps is less than a preset threshold, it is determined that the at least two Gaps conflict with each other.

As an optional embodiment, the apparatus further includes:
a second discard probability determining module, configured to determine, by the network side device, the discard probabilities of the various Gaps according to sharing factors of the various Gaps. The discard probability of a Gap is a ratio of the sharing factor of the Gap to a sum of the sharing factors of all the Gaps which conflict with each other.

As an optional embodiment, the apparatus further includes:
a third sending module, configured to determine the sharing factors of the various Gaps, and send third configuration information to the terminal, wherein the third configuration information includes: the sharing factors corresponding to the various Gaps, or the sharing factors corresponding to various Gap types.

The terminal and the network side device in the embodiments of this application determine the discard time periods of the various Gaps according to the discard probabilities of the various Gaps which conflict with each other. The terminal and the network side device ignore the discard time periods of the various Gaps. Thus, the terminal and the network side device reach an agreement on the use of the Gaps which conflict with each other, thereby improving the Gap use efficiency, improving the data transmission efficiency, and avoiding data loss.

It should be noted, if the terminal provided by the embodiments of this application is a terminal capable of performing the Gap conflict processing method described above, all the embodiments of the Gap conflict processing method are applicable to the terminal, and the same or similar advantageous effects can be achieved.

The Gap conflict processing apparatus in the embodiments of this application may be an electronic device, for example, an electronic device having an operating system, or a component in an electronic device, such as an integrated circuit or a chip. The electronic device may be a terminal or a device other than a terminal. Exemplarily, the terminal may include, but is not limited to, the types of the terminal 11 listed above, and the other device may be a server, a network attached storage (Network Attached Storage, NAS), or the like. The embodiments of this application do not impose a specific limitation on this.

The Gap conflict processing apparatus provided by the embodiments of this application can implement the various processes implemented by the method embodiments shown in FIG. 1 to FIG. 5 and achieve the same technical effects. To avoid repetition, details are not described here again.

Optionally, as shown in FIG. 10, the embodiments of this application further provide a communication device 1000, including a processor 1001 and a memory 1002. The memory 1002 stores a program or instructions runnable on the processor 1001. For example, when the communication device 1000 is a terminal, the program or instructions, when executed by the processor 1001, implements/implement all the steps of the Gap conflict processing method embodiments described above, and the same technical effects can be achieved. When the communication device 1000 is a network side device, the program or instructions, when executed by the processor 1001, implements/implement all the steps of the Gap conflict processing method embodiments described above, and the same technical effects can be achieved. To avoid repetition, details are not described here again.

The embodiments of this application further provide a terminal, including a processor and a communication interface. The processor is configured to: determine a first Gap according to priorities or sharing factors of at least two Gaps which conflict with each other, wherein the first Gap is any one of the following: a Gap, having the highest priority, of the two Gaps which conflict with each other; and a Gap, having the lowest sharing factor, of the two Gaps which conflict with each other; and use the first Gap, and ignore a first time period, which conflicts with the first Gap, in a second Gap, wherein the second Gap is a Gap which conflicts with the first Gap. In a case that at least two Gaps partially overlap, or at least two Gaps fully overlap, or a time distance between at least two Gaps is less than a preset threshold, it is determined that the at least two Gaps conflict with each other. Or, the processor is configured to: determine discard time periods of the various Gaps according to discard probabilities of various Gaps which conflict with each other; and ignore the discard time periods of the various Gaps. In a case that at least two Gaps partially overlap, or at least two Gaps fully overlap, or a time distance between at least two Gaps is less than a preset threshold, it is determined that the at least two Gaps conflict with each other. The terminal embodiment corresponds to the terminal side method embodiment described above, and all the implementation processes and implementations of the method embodiment described above can be applied to the terminal embodiment, and the same technical effect can be achieved. Specifically, FIG. 10 is a schematic structural diagram of hardware of a terminal for implementing the embodiments of this application.

The terminal 1100 includes, but is not limited to: at least some of a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

Those skilled in the art can understand that the terminal 1100 further includes a power supply (such as a battery) for supplying power to the various components. The power supply may be logically connected to the processor 1110 by using a power management system, thereby implementing functions such as charging, discharging, and power consumption management by using the power management system. The structures of the terminal shown in FIG. 10 constitute no limitation on the terminal, and the terminal may include more or fewer components than those shown in the figure, or some components may be combined, or a different component deployment may be used, details of which are omitted here.

It should be understood that in the embodiments of this application, the input unit 1104 may include a graphics processing unit (Graphics Processing Unit, GPU) 11041 and a microphone 11042, and the GPU 11041 processes image data of static pictures or videos obtained by an image capturing apparatus (such as a camera) in a video capturing mode or an image capturing mode. The display unit 1106 may include a display panel 11061, and the display panel 11061 may be configured by using a liquid crystal display, an organic light-emitting diode, or the like. The user input unit 1107 includes at least one of a touch panel 11071 and another input device 11072. The touch panel 11071 is also referred to as a touch screen. The touch panel 11071 may include two parts: a touch detection apparatus and a touch controller. The another input device 11072 may include, but not limited to, a physical keyboard, a function key (such as a volume control key or a switch key), a track ball, a mouse, and a joystick, which is not described herein again.

In the embodiments of this application, the radio frequency unit 1101 receives downlink data from a network side device and can transmit the data to the processor 1110 for processing. In addition, the radio frequency unit 1101 may transmit uplink data to the network side device. Generally, the radio frequency unit 1101 includes, but is not limited to, an antenna, an amplifier, a transceiver, a coupler, a low noise amplifier, a duplexer, and the like.

The memory 1109 is configured to store a software program or instructions and various data. The memory 1109 may mainly include a first storage area for storing a program or instructions, and a second storage area for storing data. The first storage area may store an operating system, an application program or instructions required by at least one function (for example, a sound playing function and an image display function), and the like. The memory 1109 may be a volatile memory or a non-volatile memory, or the memory 1109 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 1109 in the embodiments of this application includes these and any other suitable types of memories.

The processor 1110 may include one or more processing units. Optionally, the processor 1110 may integrate an application processor and a modem processor, wherein the application processor mainly processes operations involving an operating system, a user interface, an application program, and the like, and the modem processor mainly processes a wireless communication signal, such as a baseband processor. It can be understood that, the modem processor may not be integrated into the processor 1110.

The processor 1110 is configured to: determine a first Gap according to priorities or sharing factors of at least two Gaps which conflict with each other, wherein the first Gap is any one of the following: a Gap, having the highest priority, of the two Gaps which conflict with each other; and a Gap, having the lowest sharing factor, of the two Gaps which conflict with each other; and use the first Gap, and ignore a first time period, which conflicts with the first Gap, in a second Gap, wherein the second Gap is a Gap which conflicts with the first Gap. In a case that at least two Gaps partially overlap, or at least two Gaps fully overlap, or a time distance between at least two Gaps is less than a preset threshold, it is determined that the at least two Gaps conflict with each other.

Or, the processor 1110 is configured to: determine discard time periods of the various Gaps according to discard probabilities of various Gaps which conflict with each other; and ignore the discard time periods of the various Gaps. In a case that at least two Gaps partially overlap, or at least two Gaps fully overlap, or a time distance between at least two Gaps is less than a preset threshold, it is determined that the at least two Gaps conflict with each other.

In the embodiments of this application, the terminal and the network side device determine a first Gap according to priorities or sharing factors of at least two Gaps which conflict with each other; and the terminal and the network side device use the first Gap and ignore a first time period, which conflicts with the first Gap, in a second Gap, wherein the second Gap is a Gap which conflicts with the first Gap. Thus, the terminal and the network side device reach an agreement on the use of the Gaps which conflict with each other, thereby improving the Gap use efficiency, improving the data transmission efficiency, and avoiding data loss.

Or, the terminal and the network side device in the embodiments of this application determine the discard time periods of the various Gaps according to the discard probabilities of the various Gaps which conflict with each other. The terminal and the network side device ignore the discard time periods of the various Gaps. Thus, the terminal and the network side device reach an agreement on the use of the Gaps which conflict with each other, thereby improving the Gap use efficiency, improving the data transmission efficiency, and avoiding data loss.

It should be noted, if the terminal provided by the embodiments of this application is a terminal capable of performing the Gap conflict processing method described above, all the embodiments of the Gap conflict processing method are applicable to the terminal, and the same or similar advantageous effects can be achieved.

The embodiments of this application further provide a network side device, including a processor and a communication interface. The processor is configured to: determine a first Gap according to priorities or sharing factors of at least two Gaps which conflict with each other, wherein the first Gap is any one of the following: a Gap, having the highest priority, of the two Gaps which conflict with each other; and a Gap, having the lowest sharing factor, of the two Gaps which conflict with each other; and use the first Gap, and ignore a first time period, which conflicts with the first Gap, in a second Gap, wherein the second Gap is a Gap which conflicts with the first Gap. In a case that at least two Gaps partially overlap, or at least two Gaps fully overlap, or a time distance between at least two Gaps is less than a preset threshold, it is determined that the at least two Gaps conflict with each other. Or, the processor is configured to: determine discard time periods of the various Gaps according to discard probabilities of various Gaps which conflict with each other; and ignore the discard time periods of the various Gaps. In a case that at least two Gaps partially overlap, or at least two Gaps fully overlap, or a time distance between at least two Gaps is less than a preset threshold, it is determined that the at least two Gaps conflict with each other. The network side device embodiment corresponds to the network side device method embodiment described above, and all the implementation processes and implementations of the method embodiment described above can be applied to the network side device embodiment, and the same technical effect can be achieved.

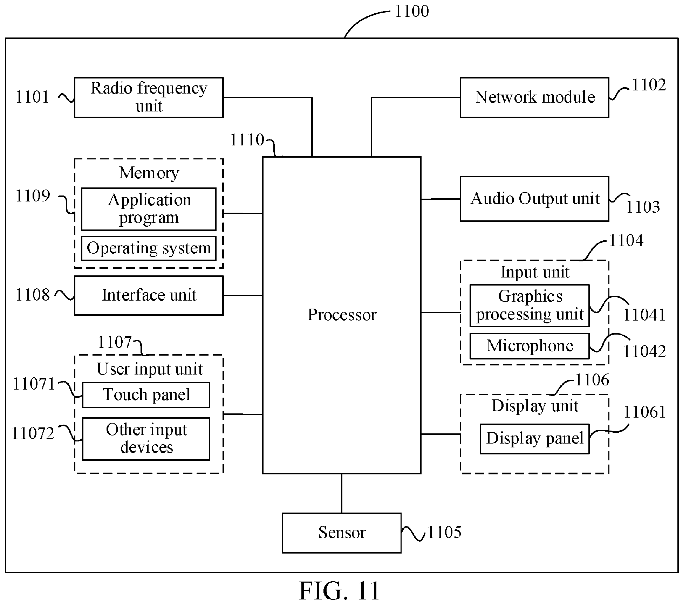

Specifically, the embodiments of this application further provide a network side device. As shown in FIG. 11, the network side device 1200 includes: an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121 and sends the received information to the baseband apparatus 123 for processing. In a downlink direction, the baseband apparatus 123 processes information to be sent and sends the information to the radio frequency apparatus 122, and the radio frequency apparatus 122 processes the received information and sends the information via the antenna 121.

The method performed by the network side device in the above embodiment may be implemented in the baseband apparatus 123, and the baseband apparatus 123 includes a baseband processor.

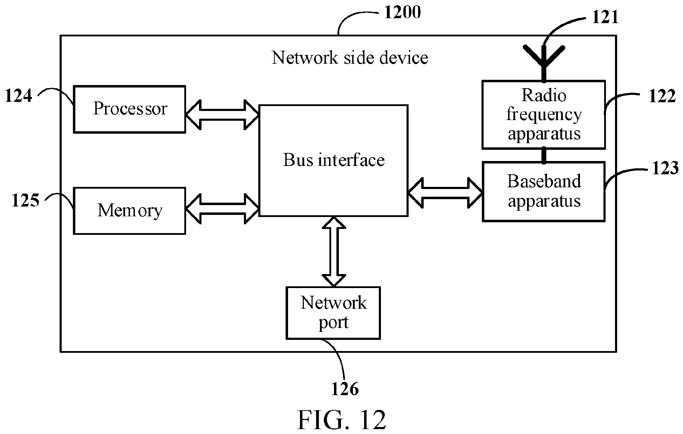

The baseband apparatus 123 may include, for example, at least one baseband board. A plurality of chips are arranged on the baseband board. As shown in FIG. 12, one of the chips is, for example, a baseband processor, connected to the memory 125 through a bus interface to call a program in the memory 125 to perform the operations of the network device shown in the above method embodiment.

The network side device may further include a network interface 126. The interface is, for example, a common public radio interface (common public radio interface, CPRI).

Specifically, the network side device 1200 of the embodiments of this application further includes: instructions or a program stored on the memory 125 and runnable on the processor 124. The processor 124 calls the instructions or program in the memory 125 to perform the methods performed by the modules shown in FIG. 8 and FIG. 9 and achieve the same technical effects. To avoid repetition, details are not described here again.

The embodiments of this application further provide a readable storage medium. The readable storage medium stores a program or instructions. The program or instructions, when executed by a processor, implements/implement all the processes of the foregoing Gap conflict processing method embodiments and can achieve the same technical effects, details of which are omitted here for brevity.

The processor is the processor in the terminal in the embodiments described above. The readable storage medium includes a computer-readable storage medium, for example, a computer read-only memory (ROM), a random access memory (RAM), a magnetic disc, a compact disc, or the like.

The embodiments of this application further provide a chip. The chip includes a processor and a communication interface. The communication interface is coupled to the processor. The processor is configured to run a program or instructions to implement all the processes of the foregoing Gap conflict processing method embodiments and can achieve the same technical effects, details of which are omitted here for brevity.

It should be understood that the chip mentioned in the embodiments of this application can also be referred to as a system chip, a chip system, or a system-on-chip.

The embodiments of this application further provide a computer program/program product. The computer program/program product is stored in a storage medium. The computer program/program product, when executed by at least one processor, implements all the processes of the foregoing Gap conflict processing method embodiments and can achieve the same technical effects, details of which are omitted here for brevity.

The embodiments of this application further provide a communication system, including: a terminal and a network side device. The terminal can be configured to execute the steps of the Gap conflict processing methods described above, and the network side device can be configured to execute the steps of the Gap conflict processing methods described above.

It should be noted, the terms "include", "comprise", or any other variations thereof here is intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of this application is not limited to performing functions in the order shown or discussed, but may also include performing functions in a substantially simultaneous manner or in an opposite order according to the functions involved. For example, the methods described may be executed in a different order than that described, and various steps may also be added, omitted, or combined. In addition, features described with reference to some examples may also be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially, or the part contributing to the prior art, may be presented in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network device, or the like) to perform the methods described in all the embodiments of this application.

The embodiments of this application have been described above with reference to the accompanying drawings. This application is not limited to the specific implementations described above, and the specific implementations described above are merely examples and not limitative. Those of ordinary skill in the art may make various forms under the teaching of this application without departing from the spirit of this application and the protection scope of the claims, and these forms shall all fall within the protection of this application.

## Claims

1. A Gap conflict processing method, comprising:
determining, by a terminal, a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
using, by the terminal, the first Gap; and
ignoring, by the terminal, a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

2. The method according to claim 1, wherein the method further comprises:
using, by the terminal, a second time period, which does not conflict with the first Gap, in the second Gap;
or,
ignoring, by the terminal, the second time period, which does not conflict with the first Gap, in the second Gap.

3. The method according to claim 2, wherein in a case that the terminal ignores the second time period, which does not conflict with the first Gap, in the second Gap, the method further comprises:
performing, by the terminal, data transmission in the second time period.

4. The method according to claim 1, wherein the method further comprises:
determining, by the terminal, a priority of the Gap according to related information of a Gap; wherein the related information of the Gap comprises at least one of:
a Gap purpose;
an association degree between the Gap and a measurement object or a radio access type;
a Gap parameter; and
a Gap type.

5. The method according to claim 4, wherein the determining, by the terminal, a priority of the Gap according to a Gap purpose comprises:
determining, by the terminal, that the priority of a task-related Gap is higher than the priority of a Gap for another purpose; the task-related Gap comprises at least one of:
a MUSIM periodic Gap;
a MUSIM paging Gap;
a MUSIM aperiodic Gap;
a Gap for a signaling process; and
a Gap for positioning measurement.

6. The method according to claim 4, wherein the determining, by the terminal, a priority of the Gap according to a Gap purpose comprises:
determining, by the terminal, that the priority of the MUSIM Gap is higher than the priority of the Gap for another purpose; the MUSIM Gap comprises at least one of:
a MUSIM periodic Gap; and
a MUSIM aperiodic Gap.

7. The method according to claim 6, wherein in a case that the Gaps which conflict with each other comprise at least one MUSIM Gap, the priorities of the various Gaps meet at least one condition as follows:
the MUSIM aperiodic Gap has a high priority;
the MUSIM periodic Gap has a high priority;
the MUSIM Gap with a specific cycle length has a high priority; and
the dedicated MUSIM Gap has a high priority.

8. The method according to claim 6, wherein the determining, by the terminal, a priority of the Gap according to a Gap purpose comprises:
determining, by the terminal, that the priority of the Gap for positioning measurement is higher than the priority of the Gap for another purpose.

9. The method according to claim 8, wherein in a case that the Gaps which conflict with each other comprise at least one Gap for positioning measurement, the method further comprises:
determining, by the terminal, that a first Gap pattern for positioning measurement has a high priority.

10. The method according to claim 4, wherein the determining, by the terminal, a priority of the Gap according to an association degree between a Gap and a measurement object or a radio access type comprises:
determining, by the terminal, that the priority of the Gap used only for a first measurement object or a first radio access type is higher than the priorities of other Gaps.

11. The method according to claim 4, wherein the Gap parameter comprises: at least one of a repetition cycle of the Gap, a Gap length, and Gap start time; the determining, by the terminal, a priority of the Gap according to a Gap parameter comprises:
determining, by the terminal, that the priority of the Gap with a large cycle is higher than the priority of the Gap with a small cycle;
or,
determining, by the terminal, that the priority of the Gap with a small length is higher than the priority of the Gap with a large length;
or,
determining, by the terminal, that the priority of the Gap with early start time is higher than the priority of the Gap with late start time;
or,
determining, by the terminal, that the Gap of which a ratio of a time length of a conflicting part to the Gap is smaller has a higher priority.

12. The method according to claim 4, wherein the Gap type comprises at least one of:
a preconfigured Gap;
a parallel Gap;
a Gap configured with an association relationship;
a network controlled small Gap;
an autonomous Gap;
a positioning Gap for positioning measurement;
a MUSIM Gap;
an uplink Gap;
a measurement Gap not configured with an association relationship;
a Gap of a master cell group; and
a Gap of a secondary cell group.

13. The method according to claim 12, wherein the determining, by the terminal, a priority of the Gap according to a Gap type comprises at least one of:
determining, by the terminal, that the priority of the Gap of the master cell group is higher than the priority of the Gap of the secondary cell group;
determining, by the terminal, that the priority of the network controlled small Gap is lower than the priorities of other types of Gaps;
determining, by the terminal, that the priority of the network controlled small Gap is higher than the priority of the autonomous Gap; and
determining, by the terminal, that the priority of the measurement Gap not configured with an association relationship is higher than the priority of the autonomous Gap.

14. The method according to claim 1, wherein in a case that the Gaps which conflict with each other comprise at least one network controlled small Gap, the method further comprises at least one of the following:
in a case that a visible interruption length (VIL) comprised in the network controlled small Gap does not conflict with the first Gap, skipping, by the terminal, ignoring the VIL; and
in a case that a part or an entirety of a measurement length (ML) comprised in the network controlled small Gap conflicts with the first Gap, and the first Gap is a per-UE Gap or a Gap with the same frequency range as the network controlled small Gap, skipping, by the terminal, transmitting data in the conflicted ML part.

15. The method according to claim 1, wherein the method further comprises:
receiving, by the terminal, first configuration information sent by a network side device, wherein the first configuration information comprises: priority indication information of the Gap; and
determining, by the terminal, the priority of the Gap according to the first configuration information, wherein the priority indication information is used for indicating a priority level of the Gap, or a priority value of the Gap.

16. The method according to claim 1, wherein the method further comprises:
receiving, by the terminal, second configuration information sent by a network side device, wherein the second configuration information comprises: the sharing factors corresponding to the various Gaps, or the sharing factors corresponding to various Gap types; and
determining, by the terminal according to the second configuration information, the sharing factors of the various Gaps which conflict each other.

17. The method according to claim 16, wherein the method further comprises:
determining, by the terminal, a target time length suitable for the sharing factors of the various Gaps; wherein the target time length is configured by a network or pre-appointed.

18. A Gap conflict processing method, comprising:
determining, by a terminal, discard time periods of the various Gaps according to discard probabilities of various Gaps which conflict with each other; and
ignoring, by the terminal, the discard time periods of the various Gaps;
wherein in a case that at least two Gaps partially overlap, or at least two Gaps fully overlap, or a time distance between at least two Gaps is less than a preset threshold, it is determined that the at least two Gaps conflict with each other.

19. The method according to claim 18, wherein the method further comprises:
determining, by the terminal, the discard probabilities of the various Gaps according to sharing factors of the various Gaps; wherein the discard probability of a Gap is a ratio of the sharing factor of the Gap to a sum of the sharing factors of all the Gaps which conflict with each other.

20. The method according to claim 19, wherein the method further comprises:
receiving, by the terminal, third configuration information sent by a network side device, wherein the third configuration information comprises: the sharing factors corresponding to the various Gaps, or the sharing factors corresponding to various Gap types; and
determining, by the terminal according to the third configuration information, the sharing factors of the various Gaps which conflict each other.

21. A Gap conflict processing method, comprising:
determining, by a network side device, a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
using, by the network side device, the first Gap; and
ignoring, by the network side device, a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

22. The method according to claim 21, wherein the method further comprises:
using, by the network side device, a second time period, which does not conflict with the first Gap, in the second Gap;
or,
ignoring, by the network side device, the second time period, which does not conflict with the first Gap, in the second Gap.

23. The method according to claim 21, wherein in a case that the network side device ignores the second time period, which does not conflict with the first Gap, in the second Gap, the method further comprises:
performing, by the network side device, data transmission in the second time period.

24. The method according to claim 21, wherein the method further comprises:
determining, by the network side device, a priority of the Gap according to related information of a Gap; wherein the related information of the Gap comprises at least one of:
a Gap purpose;
an association degree between the Gap and a measurement object or a radio access type;
a Gap parameter; and
a Gap type.

25. The method according to claim 24, wherein the determining, by the network side device, a priority of the Gap according to a Gap purpose comprises:
determining, by the network side device, that the priority of a task-related Gap is higher than the priority of a Gap for another purpose; the task-related Gap comprises at least one of:
a MUSIM periodic Gap; and
a MUSIM paging Gap;
a MUSIM aperiodic Gap;
a Gap for a signaling process; and
a Gap for positioning measurement.

26. The method according to claim 24, wherein the determining, by the network side device, a priority of the Gap according to a Gap purpose comprises:
determining, by the network side device, that the priority of the MUSIM Gap is higher than the priority of the Gap for another purpose; the MUSIM Gap comprises at least one of:
a MUSIM periodic Gap; and
a MUSIM aperiodic Gap.

27. The method according to claim 26, wherein in a case that the Gaps which conflict with each other comprise at least one MUSIM Gap, the priorities of the various Gaps meet at least one condition as follows:
the MUSIM aperiodic Gap has a high priority;
the MUSIM periodic Gap has a high priority;
the MUSIM Gap with a specific cycle length has a high priority; and
the dedicated MUSIM Gap has a high priority.

28. The method according to claim 26, wherein the determining, by the network side device, a priority of the Gap according to a Gap purpose comprises:
determining, by the network side device, that the priority of the Gap for positioning measurement is higher than the priority of the Gap for another purpose.

29. The method according to claim 28, wherein in a case that the Gaps which conflict with each other comprise at least one Gap for positioning measurement, the method further comprises:
determining, by the network side device, that a first Gap pattern for positioning measurement has a high priority.

30. The method according to claim 24, wherein the determining, by the network side device, a priority of the Gap according to an association degree between a Gap and a measurement object or a radio access type comprises:
determining, by the network side device, that the priority of the Gap used only for a first measurement object or a first radio access type is higher than the priorities of other Gaps.

31. The method according to claim 24, wherein the Gap parameter comprises: at least one of a repetition cycle of the Gap, a Gap length, and Gap start time; the determining, by the network side device, a priority of the Gap according to a Gap parameter comprises:
determining, by the network side device, that the priority of the Gap with a large cycle is higher than the priority of the Gap with a small cycle;
or,
determining, by the network side device, that the priority of the Gap with a small length is higher than the priority of the Gap with a large length;
or,
determining, by the network side device, that the priority of the Gap with early start time is higher than the priority of the Gap with late start time;
or,
determining, by the network side device, that the Gap of which a ratio of a time length of a conflicting part to the Gap is smaller has a higher priority.

32. The method according to claim 24, wherein the Gap type comprises at least one of:
a preconfigured Gap;
a parallel Gap;
a Gap configured with an association relationship;
a network controlled small Gap;
an autonomous Gap;
a positioning Gap for positioning measurement;
a MUSIM Gap;
an uplink Gap;
a measurement Gap not configured with an association relationship;
a Gap of a master cell group; and
a Gap of a secondary cell group.

33. The method according to claim 32, wherein the determining, by the network side device, a priority of the Gap according to a Gap type comprises at least one of:
determining, by the network side device, that the priority of the Gap of the master cell group is higher than the priority of the Gap of the secondary cell group;
determining, by the network side device, that the priority of the network controlled small Gap is lower than the priorities of other types of Gaps;
determining, by the network side device, that the priority of the network controlled small Gap is higher than the priority of the autonomous Gap; and
determining, by the network side device, that the priority of the measurement Gap not configured with an association relationship is higher than the priority of the autonomous Gap.

34. The method according to claim 21, wherein in a case that the Gaps which conflict with each other comprise at least one network controlled small Gap, the method further comprises at least one of the following:
in a case that a visible interruption length (VIL) comprised in the network controlled small Gap does not conflict with the first Gap, skipping, by the network side device, ignoring the VIL; and
in a case that a part or an entirety of a measurement length (ML) comprised in the network controlled small Gap conflicts with the first Gap, and the first Gap is a per-UE Gap or a Gap with the same frequency range as the network controlled small Gap, skipping, by the network side device, transmitting data in the conflicted ML part.

35. The method according to any one of claims 21 to 34, wherein the method further comprises:
sending, by the network side device, first configuration information to a terminal, wherein the first configuration information comprises: priority indication information of the Gap; and wherein the priority indication information is used for indicating a priority level of the Gap, or a priority value of the Gap.

36. The method according to claim 21, wherein the method further comprises:
determining, by the network side device, the sharing factors of the various Gaps, and sending second configuration information to the terminal, wherein the second configuration information comprises: the sharing factors corresponding to the various Gaps, or the sharing factors corresponding to various Gap types.

37. The method according to claim 36, wherein the method further comprises:
determining, by the network side device, a target time length suitable for the sharing factors of the various Gaps; wherein the target time length is determined by a network or pre-appointed.

38. A Gap conflict processing method, comprising:
determining, by a network side device, discard time periods of the various Gaps according to discard probabilities of various Gaps which conflict with each other; and
ignoring, by the network side device, the discard time periods of the various Gaps;
wherein in a case that at least two Gaps partially overlap, or at least two Gaps fully overlap, or a time distance between at least two Gaps is less than a preset threshold, it is determined that the at least two Gaps conflict with each other.

39. The method according to claim 38, wherein the method further comprises:
determining, by the network side device, the discard probabilities of the various Gaps according to sharing factors of the various Gaps; wherein the discard probability of a Gap is a ratio of the sharing factor of the Gap to a sum of the sharing factors of all the Gaps which conflict with each other.

40. The method according to claim 39, wherein the method further comprises:
determining, by the network side device, the sharing factors of the various Gaps, and sending third configuration information to the terminal, wherein the third configuration information comprises: the sharing factors corresponding to the various Gaps, or the sharing factors corresponding to various Gap types.

41. A Gap conflict processing apparatus, comprising:
a first determining module, configured to determine a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
a first use module, configured to use the first Gap; and
a first ignoring module, configured to ignore a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

42. A Gap conflict processing apparatus, comprising:
a second determining module, configured to determine discard time periods of the various Gaps according to discard probabilities of various Gaps which conflict with each other; and
a second ignoring module, configured to ignore the discard time periods of the various Gaps;
wherein in a case that at least two Gaps partially overlap, or at least two Gaps fully overlap, or a time distance between at least two Gaps is less than a preset threshold, it is determined that the at least two Gaps conflict with each other.

43. A terminal, comprising a processor and a memory, wherein the memory stores a program or instructions runnable on the processor; and the program or the instructions, when executed by the processor, implements/implement the steps of the Gap conflict processing method according to any one of claims 1 to 17, or the steps of the Gap conflict processing method according to any one of claims 18 to 20.

44. A Gap conflict processing apparatus, comprising:
a third determining module, configured to determine a first Gap according to priorities or sharing factors of at least two Gaps which conflict with each other, wherein the first Gap is any one of the following: a Gap, having the highest priority, of the two Gaps which conflict with each other; a Gap, having the lowest sharing factor, of the two Gaps which conflict with each other;
a third use module, configured to use the first Gap; and
a third ignoring module, configured to ignore a first time period, which conflicts with the first Gap, in a second Gap, wherein the second Gap is a Gap which conflicts with the first Gap; and
in a case that at least two Gaps partially overlap, or at least two Gaps fully overlap, or a time distance between at least two Gaps is less than a preset threshold, it is determined that the at least two Gaps conflict with each other.

45. A Gap conflict processing apparatus, comprising:
a fourth determining module, configured to determine discard time periods of the various Gaps according to discard probabilities of various Gaps which conflict with each other; and
a fourth ignoring module, configured to ignore the discard time periods of the various Gaps;
wherein in a case that at least two Gaps partially overlap, or at least two Gaps fully overlap, or a time distance between at least two Gaps is less than a preset threshold, it is determined that the at least two Gaps conflict with each other.

46. A network side device, comprising a processor and a memory, wherein the memory stores a program or instructions runnable on the processor; and the program or the instructions, when executed by the processor, implements/implement the steps of the Gap conflict processing method according to any one of claims 21 to 37, or the steps of the Gap conflict processing method according to any one of claims 38 to 40.

47. A readable storage medium, wherein the readable storage medium stores a program or instructions; and the program or the instructions, when executed by a processor, implements/implement the steps of the Gap conflict processing method according to any one of claims 1 to 17, or the steps of the Gap conflict processing method according to any one of claims 18 to 20, or the steps of the Gap conflict processing method according to any one of claims 21 to 37, or the steps of the Gap conflict processing method according to any one of claims 38 to 40.
